# EUROPÄISCHE PATENTSCHRIFT

(11) **EP 1 060 806 B1**
(45) Veröffentlichungstag und Bekanntmachung des Hinweises auf die Patenterteilung: **18.02.2004**
(21) Anmeldenummer: 00109960.5
(22) Anmeldetag: 11.05.2000
(51) Int. Cl.: B21C 23/21

(54) **Rohrstrangpresse**
Tube extrusion press
Presse d'extrusion de tubes

(30) Priorität: 14.06.1999 DE 19927106
(43) Veröffentlichungstag der Anmeldung: 20.12.2000
(73) Patentinhaber: SMS Eumuco GmbH, 51377 Leverkusen (DE)
(72) Erfinder: Quittmann, Uwe, Dipl.-Ing., 47877 Willich (DE); Gala. Valentin, Dipl.-Ing., 41065 Mönchengladbach (DE)

(56) Entgegenhaltungen:
- EP-A- 0 379 937
- WO-A-96/21527
- DE-B- 1 227 858

## Beschreibung

Die Erfindung betrifft eine Strang- und Rohrpresse, deren einen hohlen Preßstempel tragender Laufholm zur Aufnahme und Führung einer einen den Preßstempel durchdringenden Lochdorn tragenden Traverse mit einem an dieser angeordneten Lochkolben rahmenartig ausgebildet ist, der in einem mit dem Laufholm verbundenen Hauptpreßkolben angeordnet ist (siehe z.B. DE-A-1 227 858).

Bei der Herstellung von Rohren aus z.B. Aluminium und Kupferwerkstoffen im Strangpreßverfahren sind das direkte und das indirekte Strangpressen bekannt, mit der Schwerpunkt-Anwendung des direkten Strangpressens. Ein wesentliches Merkmal des direkten Strangpressens ist, daß Matrize und Aufnehmer während des Auspreßvorganges zueinander festliegen. Hingegen dringt beim indirekten Strangpressen die Matrize in den Aufnehmer ein. Es wird dabei durch den hohlgebohrten Matrizenstempel gepreßt, an dessen Kopf sich der Matrizenhalter mit der Matrize befindet. Der Aufnehmer wird an einer Seite mit einem Verschlußstück abgedichtet.

Eine Strang- und Rohrpresse der eingangs genannten Art und die mit einer solchen Presse für die verschiedensten Materialien durchzuführenden, umfangreichen Preßprogramme ist beispielsweise durch den "Sonderdruck aus ZEITSCHRIFT FÜR METALLKUNDE 51 (1960) 2, Seiten 3 bis 10" bekanntgeworden. Beim Betrieb derartiger Direkt- bzw. Indirekt-Strang- und Rohrpressen hat sich gezeigt, daß der Laufholm während der Produktion durch die Preßkraft auf Druck beansprucht wird. Es kommt daher zu einer Aufweitung (Ausbauchung) in jeweils der Mitte der beiden Wangen des rahmenartigen Laufholms. Da in dem Laufholm zwischen dessen Wangen die Lochtraverse geführt wird, läßt es sich nicht vermeiden, daß die Lochtraverse ihre Position infolge der Aufweitung des Laufholms außermittig verlagert. Die gewünscht engen Fertigprodukttoleranzen können sich folglich nicht mehr einhalten lassen.

Der Erfindung liegt daher die Aufgabe zugrunde, eine Strang- und Rohrpresse der eingangs genannten Art zu schaffen, bei der sich die Laufholmaufweitung nicht nachteilig auf die Führung der Lochtraverse auswirkt.

Diese Aufgabe wird in verblüffender Weise erfindungsgemäß dadurch gelöst, daß die die Lochtraverse umschließenden Rahmenteile bzw. Wangen des Laufholms eingeschnürt gestaltete Außenseiten aufweisen derart, daß der geringste Laufholmquerschnitt im bezogen auf die Laufholmlänge mittleren Bereich der Wangen liegt. Aufgrund von Berechnungen des Laufholms mit der Finite-Elemente-Methode (FEM) und Untersuchungen hat sich herausgestellt, daß sich mit eingeschnürten Außenflächen des Laufholms bzw. dessen Wangen die Aufweitung erheblich verringern läßt, was eine Abkehr von der herkömmlichen Überlegung erforderte, daß nämlich als Gegenmaßnahme eine Vergrößerung des Querschnitts getroffen werden müsse. Die erfindungsgemäß eingeschnürten Außenseiten bzw. -flächen führen unter Belastung dazu, daß die Spannungslinien entlang den Rahmeninnenseiten über den gesamten Lastbereich etwa geradlinig verlaufen.

Nach einer bevorzugten Ausführung der Erfindung sind die Laufholm-Außenseiten mit einer konkaven Einschnürung ausgebildet. Das bedeutet, daß die im Bereich der Ausnehmung zur Aufnahme der Lochtraverse verbleibenden Wangen des Laufholms sich jeweils kontinuierlich bis zum mittleren Bereich der Wangen verringern Unter konkav wird hier folglich ein Kreisbogen, aber auch eine Kettenlinie oder ein Polygon verstanden.

Weitere Einzelheiten und Vorteile der Erfindung ergeben sich aus den Ansprüchen und der nachfolgenden Beschreibung eines in den Zeichnungen dargestellten Ausführungsbeispiels der Erfindung. Es zeigen:
- Fig. 1: eine im Teil-Längsschnitt dargestellte Gesamtansicht einer Strang- und Rohrpresse;
- Fig. 2A: als Einzelheit in vereinfachter dreidimensionaler Darstellung eine Wange eines Laufholm einer herkömmlichen Presse im unbelasteten Zustand;
- Fig. 2B: die Laufholm-Wange gemäß Fig. 2A unter Last;
- Fig. 3A: als Einzelheit in vereinfachter dreidimensionaler Darstellung eine Wange des Laufholms der Presse nach Fig. 1 im unbelasteten Zustand;
- Fig. 3B: die Laufholm-Wange gemäß Fig. 3A unter Last; und
- Fig. 4: in einem Diagramm die Aufweitung des Laufholms mit einer Wangen-Ausbildung gemäß dem Stand der Technik nach Fig. 2A und nach der Erfindung gemäß Fig. 3A.

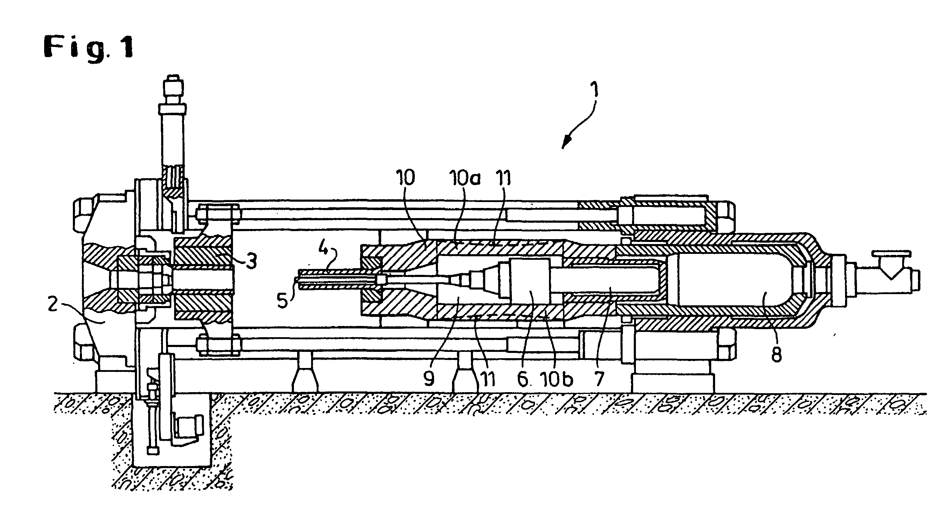

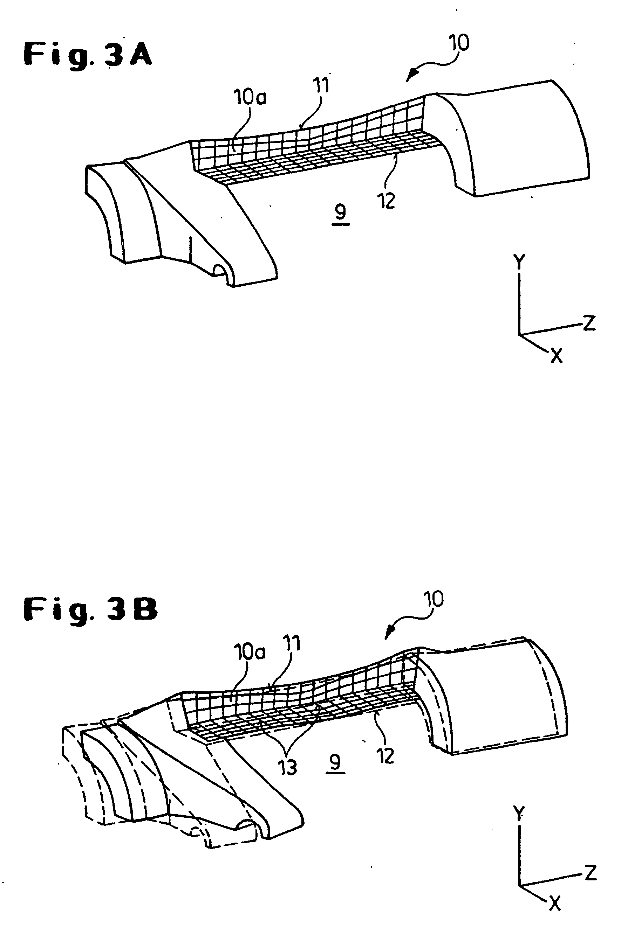

Eine wie im Ausführungsbeispiel nach Fig. 1 gezeigte Direkt-Strang- und Rohrpresse 1 ist hinlänglich bekannt. Sie umfaßt im wesentlichen einen Gegenholm 2, einen Blockaufnehmer 3, einen hohlenPreßstempel 4, einen diesen durchdringenden Lochdom 5, der von einer Lochtraverse 6 getragen wird, die mit einem Lochkolben 7 und einem Hauptpreßkolben 8 verbunden ist. Die Lochtraverse 6 wird in einer Ausnehmung 9 eines rahmenartigen Laufholms 10 aufgenommen und geführt. Die beidseitig der Ausnehmung 9 verbleibenden Wangen 10a bzw. 10b des Laufholms 10 sind an ihren Außenseiten bzw. -flächen - im Ausführungsbeispiel der horizontalen Rohr- und Strangpresse 1 oben und unten - mit konkaven Einschnürungen 11 gestaltet, wie in Fig. 1 durch die kreisbogenförmige Strichelung 11 schematisch angedeutet (vgl. auch die Fig. 3A und 3B).

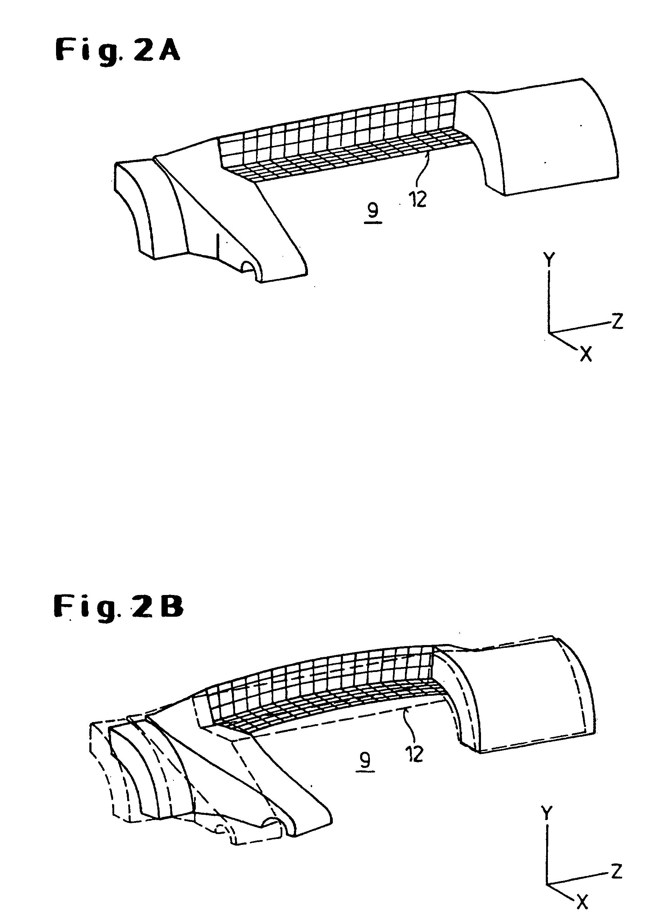

Die Fig. 2A und 2B veranschaulichen in vereinfachter dreidimensionaler Darstellung die herkömmliche Bauweise eines Laufholms einer Rohr- und Strangpresse, bei der die im Bereich der Ausnehmung 9 des rahmenartigen Laufholms verbleibenden Wangen einen über ihre gesamte Länge gleichen Querschnitt aufweisen. Der unbelastete Zustand ist in Fig. 2A und der unter Last in Fig. 2B dargestellt. Bei Belastung weiten sich die Wangen nach außen bzw. oben auf, dessen Ausmaß sich an der in Fig. 2B gestrichelt gezeichneten Ausgangslage 12 entnehmen läßt. Es ist leicht verständlich, daß sich bei einer derartigen Aufweitung bzw. Ausbauchung durch die Preßkraft die Lage der Lochtraverse 6 und damit des Lochdoms 5 unerwünscht außermittig verlagert.

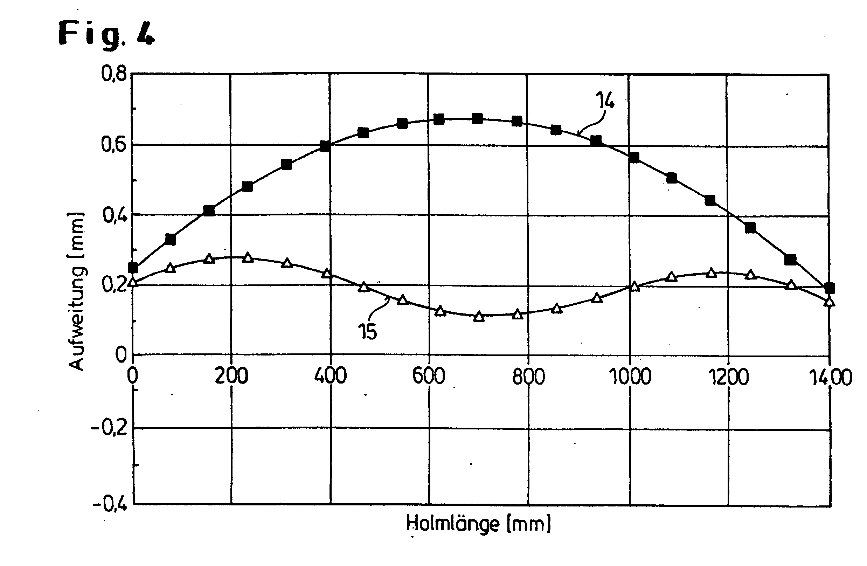

Eine demgegenüber entscheidend verringerte Aufweitung ergibt sich gemäß den Fig. 3A und 3B aufgrund der konkaven Einschnürung 11 in den Laufholmwangen 10a (bzw. 10b), denn der durch die Preßkraft auf den Laufholm 10 wirkende Druck verursacht gegenüber dem unbelasteten Zustand nach Fig. 3A eine lediglich geringfügige Abweichung von der Ausgangslage 12, wie in Fig. 3B gezeigt. Die Spannungslinien 13 nehmen entlang den Rahmen- bzw. Wangeninnenseiten einen über den gesamten Lastbereich nach wie vor etwa geradlinigen Verlauf ein. Die Führung der Lochtraverse wird nicht mehr nachteilig beeinflußt. In dem Diagramm gemäß Fig. 4 ist über der Holmlänge die Aufweitung aufgetragen. Die obere Kurve 14 gibt das Maß der Aufweitung für herkömmliche Laufholme und die Kurve 15 das demgegenüber erheblich verringerte Maß der Aufweitung für Laufholme mit eingeschnürt gestalteten Außenflächen der Wangen 10a bzw. 10b wieder.

## Patentansprüche

1. Strang- und Rohrpresse (1), deren einen hohlen Preßstempel (4) tragender Laufholm (10) zur Aufnahme und Führung einer einen den Preßstempel (4) durchdringenden Lochdorn (5) tragenden Traverse (6) mit einem an dieser angeordneten Lochkolben (7) rahmenartig ausgebildet ist, der in einem mit dem Laufholm (10) verbundenen Hauptpreßkolben (8) angeordnet ist,
**dadurch gekennzeichnet,**
**daß** die die Lochtraverse (6) umschließenden Rahmenteile bzw. Wangen (10a, 10b) des Laufholms (10) eingeschnürt gestaltete Außenseiten aufweisen derart, daß der geringste Laufholmquerschnitt im bezogen auf die Laufholm-Länge mittleren Bereich der Wangen (10a, 10b) liegt.

2. Strang- und Rohrpresse nach Anspruch 1,
**dadurch gekennzeichnet,**
**daß** die Laufholm-Außenseiten mit einer konkaven Einschnürung (11) ausgebildet sind.

## Claims

1. Strip and tube extruder (1), the guide beam (10) of which, which carries a hollow extrusion die (4), is constructed in frame-like manner for mounting and guidance of a cross member (6), which carries a mandrel plug (5) penetrating the extrusion die (4), with a plug piston (7), which is arranged at the cross member and which is disposed in a main press piston (8) connected with the guide beam (10), **characterised in that** the frame parts or cheeks (10a, 10b), which enclose the plug cross member (6), of the guide beam (10) have outer sides which are formed to be constricted in such a manner that the smallest guide beam cross-section lies in the region of the cheeks (10a, 10b) which is in the centre with respect to the guide beam length.

2. Strip and tube extruder according to claim 1, **characterised in that** the guide beam outer sides are formed with a concave constriction (11).

## Revendications

1. Boudineuse et extrudeuse à tubes (1) dont le longeron mobile (10) portant un piston (4) creux est réalisé en forme de cadre destiné à recevoir et à guider un plateau (6) portant un mandrin (5) passant à travers le piston (4) avec un piston troué (7) associé au dit plateau, ledit cadre étant disposé dans un piston principal (8) raccordé au longeron mobile (10), **caractérisée en ce que** les parties du cadre ou joues (10a, 10b) du longeron mobile (10) qui entourent le plateau (6) troué présentent des faces extérieures avec un rétrécissement, de telle manière que la section la plus petite du longeron mobile se situe dans la partie centrale des joues (10a, 10b) par rapport à la longueur du longeron mobile.

2. Boudineuse et extrudeuse à tubes (1) **caractérisée en ce que** les faces extérieures du longeron mobile sont réalisées avec un rétrécissement (11) concave.
